# EUROPÄISCHE PATENTANMELDUNG

(11) **EP 2 631 607 A1**
(43) Veröffentlichungstag der Anmeldung: **28.08.2013**
(21) Anmeldenummer: 12156342.3
(22) Anmeldetag: 21.02.2012
(51) Int. Cl.: G01D 5/347

(54) **Adapter zur Montage zweier Encoder an einer Welle**

(71) Anmelder: Moog Unna GmbH, 59423 Unna (DE)
(72) Erfinder: Vetter, Alf, 48317 Rinkerode (DE); Kunterding, Matthias, 59427 Unna (DE)

(57) **Zusammenfassung**

Die Erfindung betrifft einen Adapter zur Montage eines ersten und eines zweiten Encoders (E1, E2) an einer Welle (M), mit
einem Befestigungsflansch (V), der eine erste Befestigungsaufnahme (V1) zur lösbaren Befestigung des Befestigungsflansches (V) an einem Stator (S1) des ersten Encoders (E1) und eine zweite Befestigungsaufnahme (V2) zur lösbaren Befestigung des Befestigungsflansches (V) an einem Stator (S2) des zweiten Encoders (E2) aufweist; und
einem Wellenadapter (A), der ein erstes Befestigungsende (A1), das lösbar und verdrehsicher mit der Welle (M) verbunden ist, und ein zweites Befestigungsende (A2) aufweist, auf das ein Rotor (R2) des zweiten Encoders (E2) verdrehsicher und lösbar augesetzt ist wobei ein Rotor (R1) des ersten Encoders (E1) entweder auf der Welle (M) oder auf dem zweiten Befestigungsende (A2) verdrehsicher und lösbar aufgesetzt ist,
wobei die erste und die zweite Befestigungsaufnahme (V1, V2) sowie das erste und das zweite Befestigungsende (A1, A2,) koaxial zur Rotationsachse der Welle (M) angeordnet sind.

## Beschreibung

Die Erfindung betrifft einen Adapter zur Montage eines ersten und eines zweiten Encoders an einer Welle, vorzugsweise zur Verwendung in Windenergieanlagen.

Encoder, auch Drehgeber genannt, finden vielfältige Anwendung in Windenergieanlagen und sollen insbesondere den störungsfreien Betrieb dieser gewährleisten sowie zur Maximierung des Wirkungsgrads derartiger Anlagen beitragen.

In Windenergieanlagen werden Encoder beispielsweise zur Drehzahlmessung und Positionsbestimmung am Rotor, für die Bestimmung der Generatordrehzahl oder für die Positionierung der Gondel eingesetzt. Zur Maximierung des Wirkungsgrads einer Windenergieanlage ist es notwendig, die Rotordrehzahl an die jeweils vorherrschenden Windverhältnisse anzupassen. Für die Überwachung der Rotordrehzahl finden vorzugsweise sogenannte Inkrementalwertgeber Anwendung, welche zu diesem Zwecke beispielsweise unmittelbar über ihren Rotor auf die Generatorwelle aufgesetzt sind, um die dabei abgeleitete Drehzahlinformation der Windenergieanlagensteuerung bereit zu stellen. Mit Hilfe des Inkrementalwertgebers kann im Falle einer Drehzahlüberschreitung ein Nothalt ausgelöst werden, oder zur Gewährleistung einer gleichmäßigen Netzeinspeisung eine konstante Generatordrehzahl gewährleistet werden, wozu die Windenergieanlagensteuerung in Abhängigkeit der gemessenen Generatordrehzahl den Anstellwinkel der Rotorblätter entsprechend nachstellt.

Auch für die Maximierung des Wirkungsgrads einer Windenergieanlage ist es entscheidend, dass der Anstellwinkel der Rotorblätter, der sogenannte Pitch, je nach Windstärke und -richtung angepasst wird. Zur Bestimmung der Stellposition der Rotorblätter werden vorzugsweise Absolutwertgeber verwendet.

Häufig ist es wünschenswert, beispielsweise zur Erfassung der Generatorwellendrehzahl, neben einem Absolutwertgeber auch einen weiteren Drehgeber, etwa einen Inkrementalwertgeber, an dieselbe Motorwelle anzuschließen. Ein entsprechender Drehgeber ist aus der DE 10 2010 013 119 A1 bekannt, in welcher vorgeschlagen wird, dass zwei Drehgeber unmittelbar auf der Motorwelle aufgesetzt sind. Dies ist häufig jedoch weder wünschenswert noch möglich, beispielsweise weil die Motorwelle keine ausreichende Länge aufweist, um neben dem Rotor eines ersten Encoders auch den Rotor eines zweiten Encoders aufzunehmen. Ebenso ist es bei der vorbeschriebenen Ausführungsform entweder mit großem technischen Aufwand verbunden oder gar unmöglich, einen der beiden Encoder, sei es im Versagensfall dieses oder zur Verbesserung des Messergebnisses, gegen einen anderen Encoder auszutauschen.

Es ist daher die Aufgabe der Erfindung, einen Adapter zur einfachen Montage zweier Encoder an einer Welle vorzuschlagen, welcher es ermöglicht, dass zumindest einer der Encoder wahlweise und unter geringem Arbeitsaufwand gegen einen anderen Encoder ausgetauscht werden kann.

Diese Aufgabe wird erfindungsgemäß durch einen Adapter gelöst, der einen Befestigungsflansch und einen Wellenadapter aufweist, wobei der Befestigungsflansch eine erste Befestigungsaufnahme zur lösbaren Befestigung des Befestigungsflansches an einem Stator des ersten Encoders und eine zweite Befestigungsaufnahme zur lösbaren Befestigung des Befestigungsflansches an einem Stator des zweiten Encoders aufweist. Der Wellenadapter soll erfindungsgemäß ein erstes Befestigungsende, das lösbar und verdrehsicher mit der Welle verbunden ist, und ein zweites Befestigungsende aufweisen, auf das lösbar und verdrehsicher ein Rotor des zweiten Encoders aufgesetzt ist. Ein Rotor des ersten Encoders ist entweder auf der Welle oder auf dem zweiten Befestigungsende verdrehsicher und lösbar aufgesetzt. Dabei sind die erste und die zweite Befestigungsaufnahme sowie das erste und das zweite Befestigungsende koaxial zur Rotationsachse der Welle angeordnet.

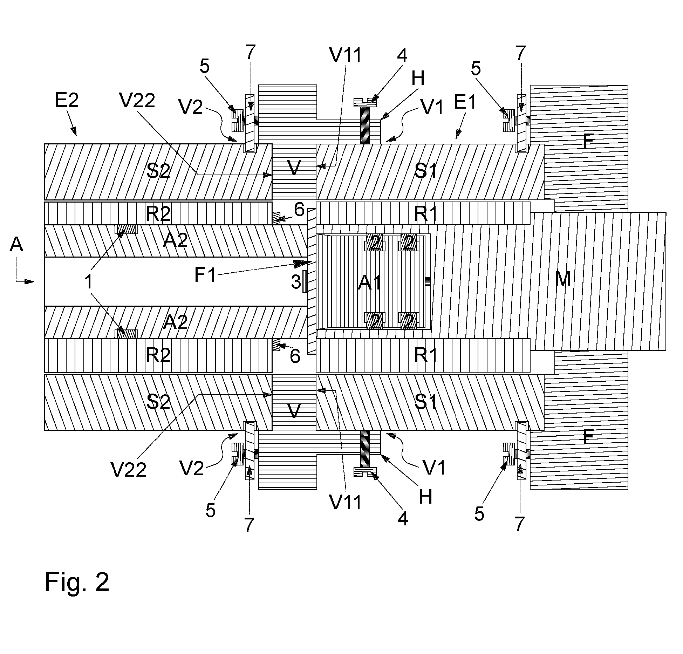

Bei einer möglichen Ausführungsform, bei welcher der Rotor des ersten Encoders auf der Welle verdrehsischer aufgesetzt ist, ist das erste Befestigungsende entlang seines äußeren Umfangs zumindest abschnittsweise, vorzugsweise über seine gesamte Länge, zylindrisch ausgebildet und weist dabei einen Außendurchmesser auf, der im Wesentlichen einem Innendurchmesser der zumindest abschnittsweise als Hohlwelle ausgebildeten Welle entspricht. Bei dieser Ausführungsform, welche im Detail mit Bezug auf Figur 2 beschrieben ist, ist somit vorgesehen, dass das erste Befestigungsende des Wellenadapters gerade derart an seinem Außenumfang ausgestaltet ist, dass es im Wesentlichen formschlüssig in der zumindest an ihrem freien Ende als Hohlwelle ausgebildeten Welle aufgenommen werden kann. Vorzugsweise weist der Außendurchmesser des ersten Befestigungsendes einen Konus auf, wobei sich das erste Befestigungsende zu seinem der Motorwelle zugewandten Ende hin und damit in axialer Richtung verjüngt. Ebenso sind bei dieser Ausführungsform vorzugsweise mindestens zwei Toleranzringe in axialer Richtung hintereinander in den Außenumfang des ersten Befestigungsendes eingelassen, so dass diese aufgrund des Konus des ersten Befestigungsendes eine unterschiedlich starke Verstauchung erfahren und damit eine unterschiedlich starke Klemmkraft auf die Innenseite der Hohlwelle ausüben.

Da es wesentlich ist, das der Wellenadapter und die Rotorwelle koaxial angeordnet sind, ist bei einer Ausführungsform in den äußeren Umfang des ersten Befestigungsendes und vorzugsweise ebenso in den äußeren Umfang des zweiten Befestigungsendes mindestens ein Toleranzring eingelassen. Der Toleranzring übernimmt neben seiner Funktion, das erste Befestigungsende in der Hohlwelle zu zentrieren ebenso die Aufgabe, das erste Befestigungsende in oder auf der Hohlwelle festzuklemmen. Für die Fixierung des Wellenadapters an der Motorwelle kann weiterhin vorgesehen sein, dass das erste Befestigungsende einen parallel und vorzugsweise koaxial zur Wellenachse verlaufenden, Durchlass aufweist, durch welchen eine Schraube durch das erste Befestigungsende über seine gesamte axiale Länge ausgehend von seinem der Motorwelle abgewandten Ende hindurch treten kann, um in einer entsprechenden Gewindeaufnahme in der Motorwelle zwecks Fixierung des Wellenadapters an der Motorwelle eingeschraubt werden zu können. Bei einer anderen Ausführungsform ist vorgesehen, dass das erste Befestigungsende über einen ersten Flansch mit dem zweiten Befestigungsende verbunden ist, wobei der Flansch einen Durchmesser aufweist, der größer als der Innendurchmesser der Hohlwelle ist. Auf diese Weise übernimmt der Flansch die Funktion eines Anschlags, um die maximale Einstecktiefe des ersten Befestigungsendes in die Hohlwelle vorzugeben.

Weiterhin ist auch das zweite Befestigungsende vorzugsweise entlang seines äußeren Umfangs zumindest abschnittsweise zylindrisch ausgebildet und weist dabei zumindest abschnittweise einen Außendurchmesser auf, der im Wesentlichen dem Innendurchmesser des Rotors des zweiten Encoders entspricht. Auch hierbei ist somit wiederum vorgesehen, dass das zweite Befestigungsende entlang seines Außenumfangs formschlüssig an dem Innenumfang des Rotors des zweiten Encoders zur Anlage kommt, wobei analog zu dem ersten Befestigungsende wiederum vorzugesweise mindestens ein Toleranzring in den äußeren Umfang des zweiten Befestigungsendes eingelassen ist, um das zweite Befestigungsende in Bezug auf den Rotor des zweiten Encoders zu zentrieren, beziehungsweise in dem Rotor zu verklemmen. Bei einer Ausführungsform ist neben dem Rotor des zweiten Encoders auch der Rotor des ersten Encoders auf dem zweiten Befestigungsende verdrehsicher und lösbar aufgesetzt, wozu das zweite Befestigungsende zumindest abschnittsweise einen Außendurchmesser aufweist, der im Wesentlichen dem Innendurchmesser des Rotors des ersten Encoders entspricht.

Je nach Ausführungsform der Erfindung kann vorgesehen sein, dass das zweite Befestigungsende beabstandet von seinem freien Ende auf seinem äußeren Umfang einen zweiten umlaufenden Flansch oder einen Sicherungsring aufweist, der einen Durchmesser aufweist, der größer als der Innendurchmesser des Rotors des zweiten Encoders ist. Der Flansch beziehungsweise der Sicherungsring übernimmt somit wiederum die Funktion eines Anschlages, welcher die maximale Einstecktiefe des zweiten Befestigungsendes in den zusätzlichen Encoder festlegt.

Bei einer Ausführungsform weist der erfindungsgemäße Adapter sowohl am Übergang zwischen dem ersten und dem zweiten Befestigungsende den zuvor beschriebenen Flansch als auch den weiteren Flansch beziehungsweise den Sicherungsring auf, so dass mit Hilfe der vorgenannten Mittel die exakte Positionierung des ersten und des zweiten Encoders zueinander und in Bezug auf die Motorwelle gewährleistet ist. Dazu können die Flansche beziehungsweise der Flansch zwischen dem ersten und dem zweiten Befestigungsende und der Sicherungsring an voneinander abgewandten Seiten jeweils einen senkrecht zur Rotationsachse der Welle ausgerichteten Anschlag aufweisen, wobei gerade in Axialrichtung über den Abstand der Anschläge der Abstand der Encoder in der Montageposition des Adapters bestimmt ist.

Ebenso können die erste und die zweite Befestigungsaufnahme jeweils einen in Montageposition des Adapters senkrecht zur Axialrichtung ausgerichteten Anschlag aufweisen, wobei wiederum in Axialrichtung über den Abstand der Anschläge der Befestigungsaufnahmen der Abstand der Encoder voneinander in der Montageposition des Adapters bestimmt ist. Es ist zweckmäßig, dass der Abstand der von den Befestigungsaufnahmen bereit gestellten Anschläge gerade dem Abstand der Anschläge entspricht, welche an dem Wellenadapter vorgesehen sind. Vorzugsweise sind jedoch die Anschläge des Wellenadapters gerade dazu ausgestaltet, den ersten und den zweiten Rotor des ersten beziehungsweise des zweiten Encoders unter einem bestimmten Abstand zueinander anzuordnen, und die Anschläge des Befestigungsflansches dazu ausgestaltet, den ersten und den zweiten Stator des ersten beziehungsweise zweiten Encoders unter einem bestimmten Abstand zueinander anzuordnen.

Bei den bevorzugten Ausführungsform der Erfindung weist zumindest die erste Befestigungsaufnahme eine umlaufende Hülse auf, in die der Stator des ersten Encoders entlang seines äußeren Umfangs im Wesentlichen formschlüssig einsetzbar ist, wobei die Hülse einen Durchlass mit Innengewinde für die Durchführung eines Gewindestiftes aufweist. Bei dieser Ausführungsform bildet das Hülsenende gerade einen Anschlag zwecks Festlegung einer maximalen Einstecktiefe des Stators des ersten Encoders in die erste Befestigungsaufnahme. Wurde der Encoder, beziehungsweise der Stator dieses, bis zu dem Anschlag vollständig eingesetzt, kann eine Gewindestift in den in der Hülse vorgesehenen Durchlass eingeschraubt werden, bis dieser zwecks Verklemmung des Encoders in der Befestigungsaufnahme auf dem äußeren Umfang des Stators auftrifft.

Zur Fixierung des zweiten Encoders in der zweiten Befestigungsaufnahme kann vorgesehen sein, dass die zweite Befestigungsaufnahme ein parallel zur Wellenachse exzentrisch gelagertes Klemmelement aufweist, das wahlweise in eine Nut im Außenumfang des Stators des weiteren Encoders einschwenkbar und in dieser Position, beispielsweise mit Hilfe einer Schraube, fixierbar ist.

Weitere Einzelheiten der Erfindung werden anhand der nachstehenden Figuren erläutert. Dabei zeigt:
- Figur 1 die bevorzugte Ausführungsform der Erfindung; und
- Figur 2 eine weitere Ausführungsform des erfindungsgemäßen Adapters.

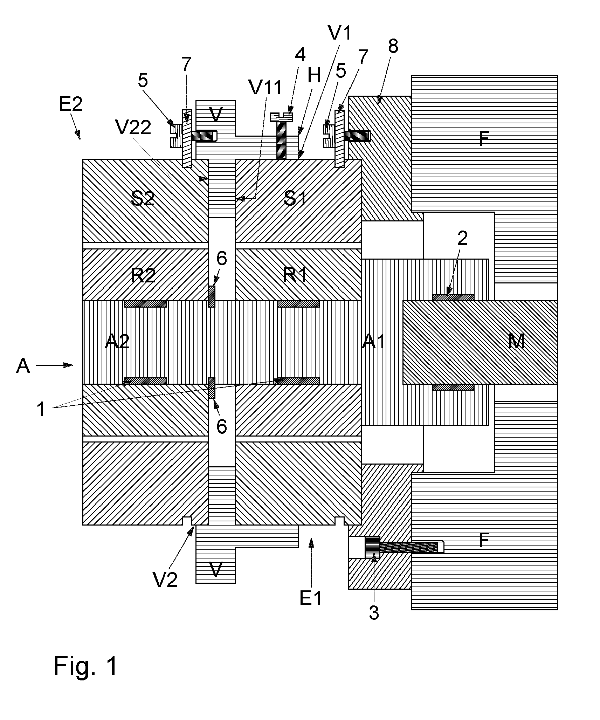

In der Figur 1 ist die bevorzugte Ausführungsform der Erfindung dargestellt, bei welcher neben dem Rotor R2 des zweiten Encoders E2 auch der Rotor R1 des ersten Encoders E1 auf dem zweiten Befestigungsende A2 verdrehsicher und lösbar aufgesetzt ist.

Für die Montage des ersten Encoders E1 und des zweiten Encoders E2 an der Motorwelle M wird in einem ersten Schritt der Wellenadapter A mit seinem ersten Befestigungsende A1 auf das freie Ende der Motorwelle M aufgeschoben. Das erste Befestigungsende A1 weist dazu eine Aufnahme auf, deren Innendurchmesser im Wesentlichen dem Außendurchmesser der Motorwelle entspricht. In den Umfang der Aufnahme innerhalb des ersten Befestigungsendes A1 ist ein Toleranzring 2 eingelassen, welcher die Aufgabe hat, das erste Befestigungsende A1 in Bezug auf die Motorwelle M auszurichten und die beiden Bestandteile miteinander zu verklemmen.

Nachdem der Wellenadapter A wie vorbeschrieben auf die Motorwelle M aufgesetzt worden ist, kann der erste Encoder E1 auf das zweite Befestigungende A2 des Wellenadapters A aufgeschoben werden. An dem Übergang zwischen dem ersten Befestigungsende A1 und dem zweiten Befestigungsende A2 ist ein Anschlag ausgebildet, an dem der erste Encoder E1 zur Anlage kommt. In das erste Befestigungsende A1 ist wiederum ein Toleranzring 1 eingelassen, welcher den ersten Encoder E1 in Bezug auf den Wellenadapter A verklemmt. Ist der erste Encoder E1 in die vorgeschriebene Endposition gebracht worden, kann er mit Hilfe des exzentrischen Klemmelements 7 an dem Motorflansch F in der Endposition fixiert werden. Das exzentrische Klemmelement 7 ist dazu mit einer Flanschverlängerung 8 verschraubt, wobei die Flanschverlängerung 8 wiederum mit Hilfe einer Schraube 3 an dem Motorflansch F fixiert ist. Die Flanschverlängerung 8 hat im Wesentlichen die Aufgabe, eine Anlagefläche für den ersten Stator S 1 bereitzustellen, welche mit dem Anschlag am Übergang zwischen dem ersten und dem zweiten Befestigungsende A1, A2 fluchtet.

Nachdem der erste Encoder E1 wie vorbeschrieben auf dem Wellenadapter A montiert worden ist, kann das freie Ende des ersten Stators S1 in die Hülse H der ersten Befestigungsaufnahme V1 eingeschoben und der Befestigungsflansch V mit dem Stator S 1 über den Gewindestift 4 verschraubt werden. Ein Anschlag V11 ist dazu vorgesehen, die Einstecktiefe des ersten Stators S 1 in die Hülse H vorzugeben. Sogleich kann der Sicherungsring 6 in eine in dem zweiten Befestigungsende A2 vorgesehene Nut eingesetzt werden. Der Sicherungsring 6 bildet dann einen dem freien Ende des zweiten Befestigungsendes A2 zugewandten Anschlag, welcher mit einem Anschlag V22 des Befestigungsflansches V fluchtet. Wird nun der zweite Encoder E2 auf das zweite Befestigungsende A2 aufgeschoben, so ist die Endposition des Encoders E2 auf dem zweiten Befestigungsende A2 durch den Anschlag des Sicherungsrings 6 und den Anschlag V22 des Befestigungsflanschs V vorgegeben, wobei in der Endposition der zweite Rotor R2 an dem Anschlag des Sicherungsrings 6 und der zweite Stator S2 an dem Anschlag V22 des Befestigungsflanschs V anliegt. In der Endposition kann der zweite Encoder E2 mit dem ersten Encoder E1 beziehungsweise mit dem Motorflansch F mit Hilfe eines exzentrischen Klemmelements 7, das in eine Nut in dem Außenumfang des zweiten Stators S2 eingreift, kraftschlüssig verbunden werden.

Wie in Figur 2 zu erkennen ist, ist der erste Encoder E1 bei der darin dargestellten Ausführungsform gerade entlang der Innenseite seines Rotors R1 auf der Motorwelle M aufgesetzt. Der Encoder E1 ist über ein exzentrisch gelagertes Klemmelement 7, dass in eine Nut des Stators S 1 eingeschwenkt und mit einer Schraube 5 an dem Motorflansch F verschraubt ist, an dem Motorflansch F auf der Motorwelle M fixiert.

Für die Montage des weiteren Encoders E2 an der Motorwelle M beziehungsweise an dem ersten Encoder E1, wird der Wellenadapter A mit seinem ersten Befestigungsende A1 in das hohle Ende der Motorwelle M eingeschoben, bis der Flansch F1 an dem Rotor R1 beziehungsweise an der Motorwelle M lagert und ein weiteres Einschieben verhindert. Das Einschieben kann mit Hilfe der Schraube 3, welche durch das Befestigungsende A1 in axialer Richtung hindurch tritt und in einer Gewindeaufnahme der Motorwelle M aufgenommen ist, unterstützt werden. Während die Hohlwelle zylindrisch oder annähernd zylindrisch ausgebildet ist, weist das Befestigungsende A1 einen Konus auf, wobei sich das Befestigungsende A1 zu seinem freien Ende, welches der Motorwelle M zugewandt ist, verjüngt. An dem Befestigungsende A1 sind in axialer Richtung hintereinander zwei Toleranzringe 2 vorgesehen, wobei aufgrund des vorbeschriebenen Konus des ersten Befestigungsendes A1 der von dem freien Ende des Befestigungsendes A1 weiter entfernt angeordnete Toleranzring 2 eine größere Verstauchung erfährt, und damit auch eine entsprechend höhere Klemmkraft auf die Innenwand der Motorwelle M ausübt, als der näher an dem freien Ende des ersten Befestigungsendes A1 angeordnete Toleranzring 2.

Nachdem der Wellenadapter A wie vorbeschrieben an der Motorwelle M befestigt worden ist, kann der Befestigungsflansch V auf den Stator S1 des ersten Encoders E 1 aufgeschoben werden, wobei der Stator S 1 in die Befestigungsaufnahme V 1 eingeschoben wird, bis das von dem Motorflansch F abgewandte Ende des Stators S 1 an dem Anschlag V11 des Befestigungsflansches V zur Anlage kommt. In dieser Endposition kann die durch den Mantel der Hülse H senkrecht zur Axialrichtung der Motorwelle M hindurch tretende Schraube 4 zur Verklemmung des Befestigungsflansches V auf dem Stator S 1 festgezogen werden.

Ist der Wellenadapter A über sein Befestigungsende A1 an der Motorwelle M und der Befestigungsflansch V an dem Stator S 1 des ersten Encoders E1 wie vorbeschrieben fixiert worden, kann der zweite Encoder E2 entlang der Innenseite seines Rotors R2 auf das zweite Befestigungsende A2 des Wellenadapters A aufgeschoben werden, so weit, bis der Rotor R2 an dem Sicherungsring 6 anschlägt. In die Außenseite des zweiten Befestigungsendes A2 ist wiederum ein Toleranzring 1 eingelassen, welcher analog zu dem ersten Befestigungsende A1 die Aufgabe übernimmt, den zweiten Encoder E2 über seinen Rotor R2 mit dem zweiten Befestigungsende A2 und damit mit dem Wellenadapter A zu verklemmen.

Bevor der zweite Encoder E2 jedoch so weit auf das zweite Befestigungsende A2 aufgeschoben werden kann, dass sein dem Motorflansch F zugewandtes Ende an dem Anschlag des Sicherungsrings 6 beziehungsweise an dem Anschlag V22 der Befestigungsaufnahme V2 zur Anlage kommt, muss sichergestellt werden, dass das exzentrisch gelagerte Klemmelement 7 an dem Befestigungsflansch V aus seiner Schließstellung herausgeschwenkt ist. Sobald der zweite Encoder E2 vollständig, das heißt bis zu den vorgenannten Anschlägen, auf das zweite Befestigungsende A2 aufgeschoben ist, kann das exzentrisch gelagerte Klemmelement 7 in seine Schließposition verschwenkt werden, in welcher es in die dargestellte Nut im Außenumfang des Stators S2 des zweiten Encoders E2 eingreift. Die kraftschlüssige Verbindung zwischen dem zweiten Encoder E2 und dem Befestigungsflansch V wird durch Anziehen der Feststellschraube 5 erreicht, was zur Folge hat, dass der Befestigungsflansch V gegenüber dem Stator S2 verklemmt wird.

Es ist zu erkennen, dass bereits mit geringfügigen Modifizierungen eines erfindungsgemäßen Adapters, beispielsweise hinsichtlich der axialen Längen des ersten beziehungsweise zweiten Befestigungsendes, hinsichtlich des Hohlwellendurchmessers oder der verwendeten Zentrierhilfen, jegliche handelsüblichen Encoder mit als Hohlwelle ausgebildetem Stator kombiniert werden können. Das Abgleichen der beiden Encoder, beispielsweise auf die Rotorlage der Windenergieanlage, kann unabhängig voneinander erfolgen, da auch die Encoder grundsätzlich unabhängige Bauteile sind. Dies ermöglicht, dass für die beiden Encoder unterschiedliche Geberoffsets vergeben werden können. Mit Hilfe des erfindungsgemäßen Adapters wird weiterhin erreicht, dass beim Ausfall eines Encoders nicht mehr der gesamte Geber ausgetauscht werden muss. Vielmehr reicht es aus, dass das jeweils defekte Teil gegen ein funktionstüchtiges ersetzt wird. Die Verwendung zweier unabhängiger Encoder hat selbstredend auch den Vorteil, dass die Redundanz des Gesamtsystems gegenüber den bekannten Lösungen erhöht wird. Die Verwendung des erfindungsgemäßen Adapters ermöglicht die frei wählbare Kombination jeglicher Standardencoder, wie Resolver, SSI-Encoder, Sin-Cos-Encoder sowie TTL-Encoder.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Toleranzring des zweiten Befestigungsendes
- 2: Toleranzring des ersten Befestigungsendes
- 3: Schraube
- 4: Gewindestift
- 5: Fixierschraube
- 6: Sicherheitsring
- 7: exzentrisches Klemmelement
- 8: Flanschverlängerung
- A: Wellenadapter
- A1: erstes Befestigungsende
- A2: zweites Befestigungsende
- E1: erster Encoder
- E2: zweiter Encoder
- F: Motorflansch
- F1: Wellenadapterflansch
- H: Hülse
- R1: erster Rotor
- R2: zweiter Rotor
- S1: erster Stator
- S2: zweiter Stator
- V: Befestigungsflansch
- V1: erste Befestigungsaufnahme
- V2: zweite Befestigungsaufnahme
- V11: Anschlag der ersten Befestigungsaufnahme
- V22: Anschlag der zweiten Befestigungsaufnahme

## Patentansprüche

1. Adapter zur Montage eines ersten und eines zweiten Encoders (E1, E2) an einer Welle (M), mit
- einem Befestigungsflansch (V), der eine erste Befestigungsaufnahme (V1) zur lösbaren Befestigung des Befestigungsflansches (V) an einem Stator (S1) des ersten Encoders (E1) und eine zweite Befestigungsaufnahme (V2) zur lösbaren Befestigung des Befestigungsflansches (V) an einem Stator (S2) des zweiten Encoders (E2) aufweist; und
- einem Wellenadapter (A), der ein erstes Befestigungsende (A1), das lösbar und verdrehsicher mit der Welle (M) verbunden ist, und ein zweites Befestigungsende (A2) aufweist, auf das ein Rotor (R2) des zweiten Encoders (E2) verdrehsicher und lösbar aufgesetzt ist, wobei ein Rotor (R1) des ersten Encoders (E1) entweder auf der Welle (M) oder auf dem zweiten Befestigungsende (A2) verdrehsicher und lösbar aufgesetzt ist,
wobei die erste und die zweite Befestigungsaufnahme (V1, V2) sowie das erste und das zweite Befestigungsende (A1, A2,) koaxial zur Rotationsachse der Welle (M) angeordnet sind.

2. Adapter nach Anspruch 1, bei dem für den Fall, dass der Rotor (R1) des ersten Encoders (E1) auf der Welle (M) verdrehsicher aufgesetzt ist, das erste Befestigungsende (A1) entlang seines äußeren Umfangs zumindest abschnittsweise zylindrisch ausgebildet ist und dabei einen Außendurchmesser aufweist, der im Wesentlichen einem Innendurchmesser der zumindest abschnittsweise als Hohlwelle ausgebildeten Welle (M) entspricht.

3. Adapter nach Anspruch 2, bei dem das erste Befestigungsende (A1) über einen ersten Flansch (F1) mit dem zweiten Befestigungsende (A2) verbunden ist, wobei der Flansch (F1) einen Durchmesser aufweist, der größer als der Innendurchmesser der Hohlwelle (M) ist.

4. Adapter nach einem der vorangegangenen Ansprüche, bei dem das zweite Befestigungsende (A2) entlang seines äußeren Umfangs zumindest abschnittsweise zylindrisch ausgebildet ist und dabei zumindest abschnittsweise einen Außendurchmesser aufweist, der im Wesentlichen dem Innendurchmesser des Rotors (R2) des zweiten Encoders (E2) entspricht.

5. Adapter nach Anspruch 4, bei dem das zweite Befestigungsende (A2) beabstandet von seinem freien Ende auf seinem äußeren Umfang einen zweiten umlaufenden Flansch oder einen Sicherungsring (6) aufweist, der einen Durchmesser aufweist, der größer als der Innendurchmesser des Rotors (R2) des zweiten Encoders (E2) ist.

6. Adapter nach Anspruch 5, bei dem die Flansche beziehungsweise der Flansch (F1) und der Sicherungsring (6) an voneinander abgewandten Seiten jeweils einen senkrecht zur Rotationsachse der Welle (M) ausgerichteten Anschlag aufweisen, wobei in Axialrichtung über den Abstand der Anschläge der Abstand der Encoder (E1, E2) voneinander bestimmt ist.

7. Adapter nach einem der vorangegangenen Ansprüche, bei dem in den äußeren Umfang des ersten und/oder des zweiten Befestigungsendes (A1, A2) mindestens ein Toleranzring (1, 2) eingelassen ist.

8. Adapter nach einem der vorangegangenen Ansprüche, bei dem die erste und die zweite Befestigungsaufnahme (V1, V2) jeweils einen in Montageposition des Adapters senkrecht zur Axialrichtung ausgerichteten Anschlag (V11, V22) aufweist, wobei in Axialrichtung über den Abstand der Anschläge (V11, V22) der Befestigungsaufnahmen (V1, V2) der Abstand der Encoder (E1, E2) voneinander bestimmt ist.

9. Adapter nach einem der vorangegangenen Ansprüche, bei dem zumindest die erste Befestigungsaufnahme (V1) eine umlaufende Hülse (H) aufweist, in die der Stator (S1) entlang seines äußeren Umfangs im Wesentlichen formschlüssig einsetzbar ist, wobei die Hülse (H) einen Durchlass für wenigstens einen Gewindestift (4) aufweist.

10. Adapter nach einem der vorangegangenen Ansprüche, bei dem die zweite Befestigungsaufnahme (V2) ein parallel zur Wellenachse exzentrisch gelagertes Klemmelement (7) aufweist, das wahlweise in eine Nut im Außenumfang des Stators (S2) des weiteren Encoders (E2) einschwenkbar und in dieser Position fixierbar ist.
